(19) **Europäisches Patentamt**
**European Patent Office**
**Office européen des brevets**

(11) **EP 1 820 360 B1**

(12) **EUROPEAN PATENT SPECIFICATION**

(45) Date of publication and mention
of the grant of the patent:
**27.02.2013 Bulletin 2013/09**

(51) Int Cl.:
*H04W 72/08* (2009.01)

(21) Application number: **05821440.4**

(22) Date of filing: **05.12.2005**

(86) International application number:
**PCT/KR2005/004114**

(87) International publication number:
**WO 2006/062316 (15.06.2006 Gazette 2006/24)**

(54) **METHOD OF CONTROLLING BASE STATIONS TO SUPPRESS INTER-CELL INTERFERENCE**

VERFAHREN ZUR STEUERUNG VON BASISSTATIONEN ZUM UNTERDRÜCKEN VON INTERFERENZEN ZWISCHEN ZELLEN

PROCEDE PERMETTANT DE REGLER DES STATIONS DE BASE DE MANIERE A SUPPRIMER LES INTERFERENCES INTERCELLULAIRES

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.12.2004 KR 20040103238**
**04.05.2005 KR 20050037602**

(43) Date of publication of application:
**22.08.2007 Bulletin 2007/34**

(73) Proprietor: **Electronics and Telecommunications Research**
**Institute**
**Daejeon 305-350 (KR)**

(72) Inventors:
• **KWON, Jae Kyun**
**Daejeon 305-755 (KR)**
• **LEE, Hee Soo**
**Daejeon 305-325 (KR)**
• **AHN, Jae Young**
**Daejeon 305-761 (KR)**

(74) Representative: **Esslinger, Alexander**
**Betten & Resch**
**Patentanwälte**
**Theatinerstrasse 8**
**D-80333 München (DE)**

(56) References cited:
**EP-A1- 1 418 776    CA-C- 2 162 256**
**KR-A- 2004 076 438    US-A1- 2001 017 851**
**US-B1- 6 473 418**

• **LEE D ET AL: "Frequency reuse factor vs. pathloss exponent and sectorization", WIRELES APPLICATIONS DIGEST, 1997., IEEE MTT-S SYMPOSIUM ON TECHNOLOGI ES FOR VANCOUVER, BC, CANADA 23-26 FEB. 1997, NEW YORK, NY, USA,IEEE, US, 23 February 1997 (1997-02-23), pages 109-112, XP010226755, DOI: 10.1109/MTTTWA.1997.595122 ISBN: 978-0-7803-3318-5**

## Description

## Background Art

1. Field of the Invention

The present invention relates to a method of controlling base stations, and more particularly, to a method of controlling base stations that is capable of suppressing inter-cell interference.

2. Description of Related Art

In a conventional frequency division multiple access ("FDMA")/time division multiple access ("TDMA") based cellular system, adjacent cells do not share resources for avoidance of interference. This allows a sufficient signal to interference ratio while low frequency reuse efficiency of the system results in reduced system capacity.

In the prior art FDMA/TDMA systems, voice service having a substantially constant data rate is mainly provided. To expand the system capacity, it is required to increase the number of available channels having a sufficient signal to interference ratio through power control. Code division multiple access ("CDMA") based cellular systems have spread since they are capable of significantly increasing the frequency reuse efficiency. CDMA systems reduce a variation in interference with each channel through interference averaging, allowing most of channels to suffer moderate interference for a voice call.

This method, however, is no longer optimal as primary service has shifted from voice service of constant data rate to packet service of variable data rate. In addition, an issue of addressing interference between adjacent cells has been raised as an orthogonal frequency division multiplexing/orthogonal frequency division multiple access ("OFDM/OFDMA") technique capable of easily adopting interference avoidance is applied to a cellular domain.

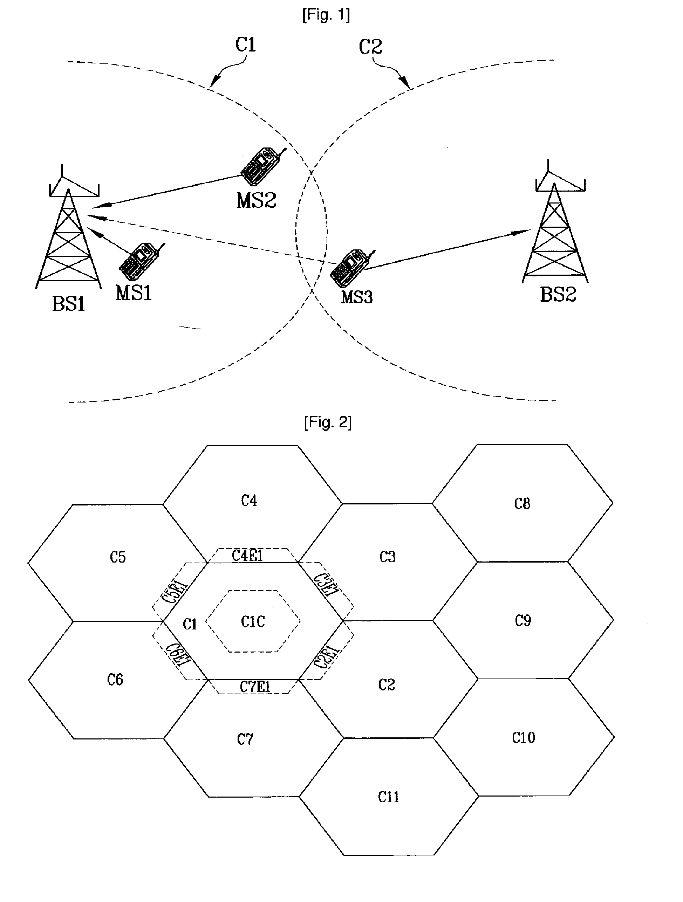

FIG. 1 illustrates inter-cell interference. For convenience for illustration, two base stations BS1 and BS2 and three terminals MS1, MS2 and MS3 are shown in FIG. 1.

Referring to FIG. 1, a first terminal MS1 is located at a center of a first cell C1 and is in communication with a first base station BS1. The second terminal MS2 is located in the boundary of the first cell C1 that is adjacent to a second base station BS2, and is in communication with the first base station BS1. A third terminal MS3 is located in the boundary of the second cell C2 that is adjacent to the first base station BS1, and is in communication with the second base station BS2.

Signals forwarded from the third terminal MS3 to the first base station BS1 act as interference to the first base station BS1. When the first terminal MS1 and the third terminal MS3 use the same frequency for communication, a signal to interference ratio (SIR) for an up-link signal transmitted from the first terminal MS 1 to the first base station BS1 is lowered due to interference by the third terminal MS3. However, because the first terminal MS1 and the first base station BS1 are very close to each other while the third terminal MS3 and the first base station BS1 are apart from each other, the interference is not great and the first terminal MS1 is capable of performing normal communication with the first base station BS1 despite the presence of interference by the third terminal MS3. That is, the first terminal MS1 and the third terminal MS3 are allowed to use the same frequency.

On the other hand, when the second terminal MS2 and the third terminal MS3 use the same frequency for communication, interference becomes very severe. That is, because there is no great difference between distance from the second terminal MS2 to the first base station BS1 and distance from the third terminal MS3 to the first base station BS1, interference by the third terminal MS3 is very strong, thereby lowering a signal to interference ratio of an up-link signal transmitted from the second terminal MS2 to the first base station BS1. Thus, the use of the same frequency in the second terminal MS2 and the third terminal MS3 leads to interference therebetween, which makes it difficult to perform communication.

To solve these problems, a method has been proposed in which a cell is divided into a boundary portion and a center portion for assignment of tone set. This method is disclosed in Korean Laid-open Patent Publication No. 2004-0076438.

However, the use of this method causes a problem in that only one-third of available tones are assigned to the boundary portion of the cell while two-thirds of the available tones are assigned to the center portion of the cell due to a relationship between the cell and neighboring cells. That is, the available tones cannot be used efficiently since only the one-third of the available tones are assigned to terminals located in a boundary portion of an actual cell even though the boundary portion accommodates much more terminals compared to a center portion.

CA 2 162 256 A1 discloses a method and system for the adaptive allocation of channels within a radio communication system, specifically a cellular network. The allocation method takes advantage of measurements made by the mobile radiotelephone and allocates channels based on the carrier to interference ratio. Using adaptive power control, consideration is given to maintaining an acceptable carrier to interference ratio while at the same time minimizing transmit power.

US 2001/017851 A1 discloses a technique for decreasing undesirable interference to adjacent cells of adjacent base stations in a mobile communication system having a plurality of radio packet channels of different transmission rate with each other between a base station and a mobile station. According to this technique, a signal quality of a receive signal at a mobile station is measured, and the packet channel is assigned based on said signal quality. This leads to the effects of no increase of transmission power of a base station even in the case said signal quality is poor because of long distance between the base station and the mobile station, and decrease in the interference to adjacent cells.

SUMMARY OF THE INVENTION

Accordingly, the present invention is directed to a method of controlling base stations that is capable of suppressing inter-cell interference and efficiently utilizing available resources.

The present invention is defined in the independent claims. The dependent claims define embodiments.

According to an aspect of the present invention, there is provided a method of controlling base stations, the method comprising steps of: (a) receiving information on path loss from a terminal; (b) determining a time region for the terminal based on the path loss information; and (c) performing communication with the terminal within the determined time region.

Preferably, the step (b) may comprise steps of: comparing a difference in path loss between a first base station to which the terminal belongs and a second base station which is the most significantly interfered with terminal to a predetermined threshold value; when the difference in the path loss is greater than the threshold value, assigning a whispering time region of the first base station to the terminal; and when the difference in the path loss is smaller than the threshold value, assigning a whispering time region of the second base station to the terminal. Further, the step (b) may comprise steps of: comparing path loss in the second base station which is which is the most significantly interfered with terminal to a predetermined threshold value; when the path loss is greater than the threshold value, assigning to the terminal a whispering time region of the first base station to which the terminal belongs; and when the path loss is smaller than the threshold value, assigning to the terminal a whispering time region of the second base station.

According to another aspect, there is provided a method of controlling base stations, the method comprising steps of: (a) receiving information on path loss from a terminal; (b) determining a frequency region for the terminal based on the path loss information; and (c) performing communication with the terminal within the determined frequency region.

Preferably, the step (b) may comprise steps of: comparing a difference in path loss between a first base station to which the terminal belongs and a second base station which is the most significantly interfered with terminal to a predetermined threshold value; when the difference in the path loss is greater than the threshold value, assigning a whispering frequency region of the first base station to the terminal; and when the difference in the path loss is smaller than the threshold value, assigning a whispering frequency region of the second base station to the terminal. Further, the step (b) may comprise steps of: comparing path loss in the second base station which is the most significantly interfered with terminal to a predetermined threshold value; when the path loss is greater than the threshold value, assigning to the terminal a whispering frequency region of the first base station to which the terminal belongs; and when the path loss is smaller than the threshold value, assigning to the terminal a whispering frequency region of the second base station.

According to yet another aspect, there is provided a method of controlling base stations, the method comprising steps of: (a) receiving information on path loss from a terminal; (b) determining a code region for the terminal based on the path loss information; and (c) performing communication with the terminal within the determined code region.

## Brief Description of the Drawings

The above and other features and advantages of the present invention will become more apparent to those of ordinary skill in the art by describing in detail preferred embodiments thereof with reference to the attached drawings in which:

FIG. 1 illustrates inter-cell interference;

FIG. 2 illustrates a basic concept of a method of controlling base stations according to a first embodiment of the present invention;

FIGS. 3 and 4 illustrate positions of a cell in which terminals located at a center portion of the cell perform communication in the method of controlling base stations according to the first embodiment of the present invention;

FIG. 5 is a flowchart of a method of controlling base stations according to a first embodiment of the present invention;

FIGS. 6 to 8 illustrate exemplary steps of determining a time region in the method of controlling base stations according to the first embodiment of the present invention;

FIG. 9 illustrates a simulation result of an up-link signal to interference ratio (SIR) in a cumulative distribution function (CDF) at a center cell under seven cells represented in FIG. 3 according to a method for determining the time region represented in FIG. 7;

FIG. 10 illustrates a concept of a method of controlling base stations according to a second embodiment of the present invention;

FIG. 11 is a flowchart of a method of controlling base stations according to the second embodiment of the present invention; and

FIGS. 12 to 14 illustrate exemplary steps of determining a frequency region in the method of controlling base stations according to the second embodiment of the present invention.

DETAILED DESCRIPTION OF THE PREFERRED EMBODIMENTS

Hereinafter, an exemplary embodiment of the present invention will be described in detail. However, the present invention is not limited to the embodiments disclosed below. Therefore, the present embodiment is provided for complete disclosure of the present invention and to fully inform the scope of the present invention to those ordinarily skilled in the art.

FIG. 2 illustrates a basic concept of a method of controlling base stations according to a first embodiment of the present invention.

In FIG. 2, there is shown eleven cells, and a base station is assumed to be at a center of each cell.

Referring to FIG. 2, when terminals located at a center portion C1C of a first cell C1 perform communication with a base station in the first cell C1, terminals located at boundary portions C2E1 to C7E1, adjacent to the first cell C1, of second to seventh cells C2 to C7 perform communication with respective base stations of the second to seventh cells C2 to C7. While terminals at the boundary portions C2E1 to C7E1, adjacent to the first cell C1, of the second to seventh cells C2 to C7 significantly interfere with the base station of the first cell C1 due to close proximity, the terminals located at the center portion C1C of the first cell C1 can obtain a sufficient signal to interference ratio by virtue of excellent signal quality. As a result, the terminals located at the center portion C1C of the first cell C1 and the terminals located at the boundary portions C2E1 to C7E1, adjacent to the first cell C1, of the second to seventh cells C2 to C7 can transmit signals to the base stations without suffering significant degradation of performance that is caused by inter-cell interference.

Thereafter, when the terminals located at the center portion of the second cell C2 perform communication with the base station of the second cell C2, terminals located at the boundary portions, adjacent to the second cell C2, of the first, third, seventh, ninth, tenth and eleventh cells C1, C3, C7, C9, C10 and C11 perform communication with respective base stations in the first, third, seventh, ninth, tenth and eleventh cells C1, C3, C7, C9, C10 and C11. It is also possible for the terminals to transmit signals to the base stations without suffering significant degradation of performance that is caused by inter-cell interference.

Terminals located at respective center portions of the third to seventh cells C3 to C7 and terminals located at adjacent boundary portions then transmit signals to the base stations in the same period of time.

By performing the communication in such a manner, it is possible to suppress interference between cells and terminals at cell boundary portions. Further, the terminals located at the boundary portion are allowed to perform communication during sufficient period of time since the terminals located at the center portion C1C of the first cell C1 and the terminals located at the boundary portion C2E1, adjacent to the first cell C1, of the second cell C2 perform communication during the same period of time.

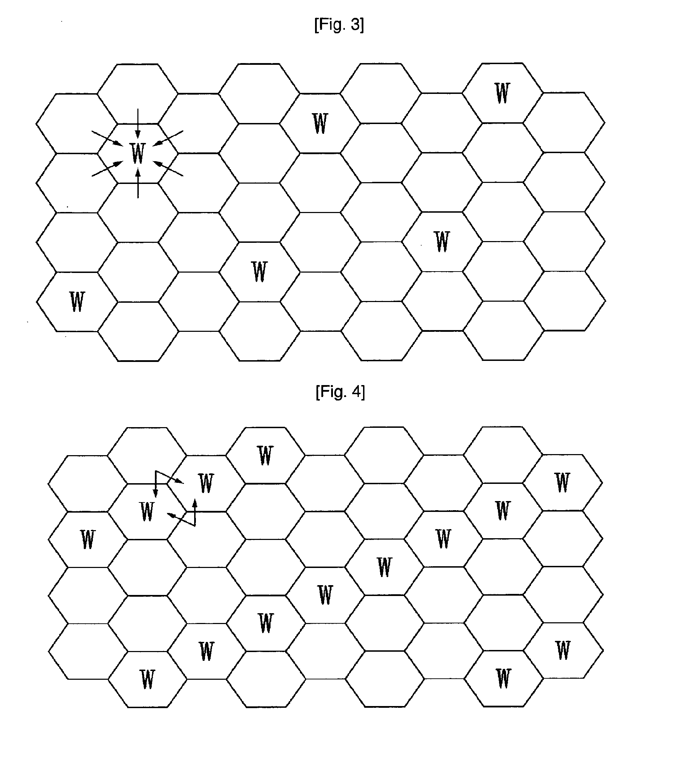

FIGS. 3 and 4 illustrate positions of a cell in which terminals located at a center portion of the cell perform communication using the method of controlling base stations according to the first embodiment of the present invention.

Referring to FIG. 3, terminals located at a center portion of each of cells indicated by reference numeral W transmit a signal to a base station of each cell. For convenience of illustration, these cells are called whispering cells. Terminals located at boundary portions of whispering cells other than the cells indicated by reference number W transmit a signal to a base station of each cell. For convenience of illustration, these cells are called speaking cells. As indicated by arrows in FIG. 3, the speaking cells interfere with the whispering cell W. However, such interference does not obstruct smooth communication of terminals located at the center portion of the whispering cell W since the terminals are very close to the base station. That is, the terminals located at the center portion of the whispering cell W are less influenced by inter-cell interference in performing communications.

In FIG. 3, one-seventh of all cells are whispering cells W and remaining cells are speaking cells. Accordingly, the positions of the whispering cells W vary over time with seven patterns.

Referring to FIG. 4, terminals located at a center portion of each of the whispering cells indicated by reference numeral W transmit a signal to a base station in each cell. In the speaking cells other than the cells indicated by reference number W, terminals located at the boundary portion of whispering cells transmit a signal to the base station in each cell. In this case, one-third of all cells are whispering cells W and the remaining cells are speaking cells.

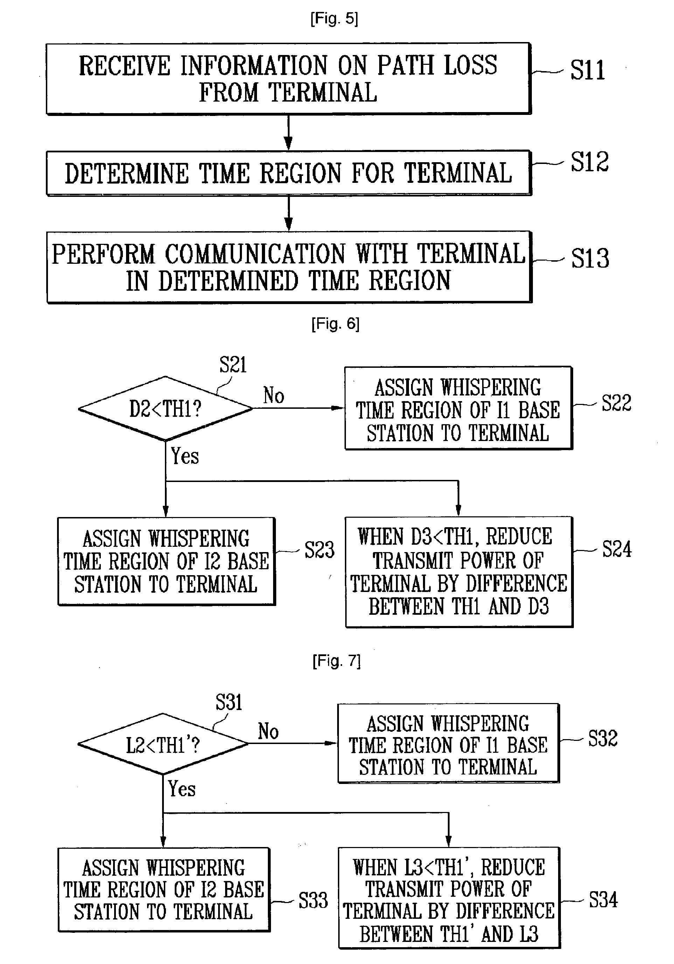

FIG. 5 is a flowchart of a method of controlling base stations according to a first embodiment of the present invention.

Referring to FIG. 5, a method of controlling base stations includes Step S 11 of receiving information on path loss from a terminal, Step S12 of determining a time (resource) region for the terminal and Step S 13 of performing communication with the terminal in the determined time region. By the method including such steps, the base station assigns the terminal to a desired time region to perform communication. If a cell structure is the same as that shown in FIG. 2, the first cell C1 is divided into at least seven time regions. Among them, a first time region is assigned to terminals located at the center portion C1C of the first cell C1, a second time region is assigned to terminals located at places, adjacent to the second cell C2, of the first cell C1, and third to seventh time regions are assigned to terminals located at places, adjacent to the third to seventh cells C3 to C7, of the first cell C1. With the above-described method, the terminal is assigned to any one of the seven time regions to perform communication with the base station. Of course, if the cell structure is not the same as that shown in FIG. 2, one cell may have seven or more or less time regions.

The path loss information refers to information on path loss of a signal transmitted from a base station to which the terminal belongs, to the terminal and path loss of a signal transmitted from adjacent base stations to the terminal. The path loss may be obtained from strength of a pilot signal the terminal receives from the base stations. The path loss may be represented by Equation 1:

<Equation 1>

$$L1 = PS1 - PR1$$

In Equation 1, L1 indicates path loss related to the first base station, PS1 indicates strength of a pilot signal transmitted from the first base station, and PR1 indicates strength of a pilot signal received at the terminal. Loss values on paths from the base stations to the terminals may be forwarded as path loss information to the base station. Simply, strengths of pilot signals received from the base stations may be forwarded as the path loss information to the base station and actual path loss values may be obtained through operation in the base station.

The path loss information may be forwarded to the base station in the form of an inter-cell interference vector as represented by Equation 2.

<Equation 2>

$$Vid = (I1, I2, ... Im)$$
$$Vpl = (L1, L2, ... Lm)$$

In Equation 2, Vid indicates a cell ID vector, and Vpl indicates a path loss vector. Further, path loss values that are elements of the path loss vector are all positive numbers in dB and $L1 \leq L2 \leq ... \leq Lm$. Elements of the cell ID vector are unique identifiers of a base station, i.e., a cell having relevant path loss. The vector is directed from a base station having less path loss, i.e., a base station believed as being close on the path. Accordingly, the first element I1 of the vector indicates a base station that serves the terminal. The second element I2 of the vector indicates a base station which is the most significantly interfered with terminal. For convenience of understanding, if the terminal is located in the first cell of FIG. 2, the first element I1 of the vector indicates the base station of the first cell C1. If the terminal is located at a place, adjacent to the second cell C2, of the first cell C1, the terminal will most significantly interfere with a base station of the second cell C2 among the base stations of the adjacent cells C2 to C7, and accordingly, the second element I2 of the vector indicates the base station of the second cell C2. Similarly, if the terminal is located at a place, adjacent to the third cell C3, of the first cell C1, the second element I2 of the vector indicates the base station of the third cell C3, and if the terminal is located at a place, adjacent to the one of the fourth to seventh cells C4 to C7, of the first cell C1, the second element I2 of the vector indicates the base station of one of the fourth to seventh cells C4 to C7. For application of the present invention, such vectors should have at least two or more elements for best performance. In the present invention, the path loss includes loss due to distance and loss due to slow fading, i.e., shadowing. However, the path loss does not include loss due to fast fading for which link adaptation is impossible.

In Step S12 of determining the time region for the terminal, the base station assigns the time region to the terminal based on path loss information from a served terminal. As described above, the path loss information may be the inter-cell interference vector. If the path loss L2, related to the adjacent base station I2, of the inter-cell interference vector of the terminal is small, the relevant terminal will significantly interfere with the adjacent base station I2. Accordingly, the base station I1 assigns the time region to the terminal so that the terminal performs up-link communication concurrently with terminals located at a center portion of the relatively less interfered, adjacent base station I2. For convenience of illustration, this time region is referred to as a whispering time region of the adjacent base station I2. On the other hand, in the case where the path loss L2, related to the adjacent base station I2, of the inter-cell interference vector of the terminal is great, when the terminal performs the up-link communication, the terminal is less influenced by other terminals that perform the up-link communication in the adjacent base stations. The base station I1 assigns the time region for the terminal so that the terminal performs the up-link communication concurrently with terminals located at a boundary portion of a cell to which the adjacent base station I2 belongs. For convenience of illustration, this time region is referred to as a whispering time region of the base station I1. In summary, time regions are assigned to terminals so that terminals located in cells adjacent to a predetermined cell and significantly interfering with the predetermined cell and terminals located in the predetermined cell and having sufficient signal strength perform simultaneous communication. That is, the terminals located in cells adjacent to a predetermined cell and significantly interfering with the predetermined cell and the terminals located in the predetermined cell and having sufficient signal strength are assigned a whispering time region of the predetermined cell.

In Step S 13 of performing communication with the terminal in the determined time region, the base station performs communication with the terminal in the time region to which the terminal belongs. If there are located six cells in the vicinity of one cell as represented in FIG. 3, the cell is divided into seven regions, i.e., one region that has a great signal to interference ratio since the cell has great signal strength even though it interferes with adjacent cells, and six regions interfering with six neighboring cells. In this case, because terminals in the regions of the cell perform sequential communication, each region is allowed to perform communication during 1/7 period of time. Of course, there may be several terminals that are allowed to communicate with the base station during their time region, and each terminal performs communication within its assigned range of time or frequency in the time region.

FIG. 6 illustrates an exemplary step of determining a time region in the method of controlling base stations according to the first embodiment of the present invention.

Referring to FIG. 6, Step of determining the time region includes Step S21 of comparing a difference ("D2") in path loss between an I1 base station and an I2 base station to a first threshold value ("TH1"); Step S22 of assigning a whispering time region of the I1 base station to a terminal when D2 is greater than the first threshold value; and Step S23 of assigning a whispering time region of the I2 base station to the terminal when D2 is smaller than the first threshold value. The step of determining the time region may further include Step S24 of, when D2 is smaller than the first threshold value, comparing a difference ("D3") in path loss between the I1 base station and an I3 base station to the first threshold value and, when D3 is smaller than the first threshold value, reducing transmit power of the terminal by the difference between the first threshold value and D3.

This method is especially effective when receive power of the base station is substantially fixed and may be lowered if necessary.

Advantageously, by the method further including Step S24, it is possible to lower interference with the I3 base station of a terminal, which interferes with the I3 base station as well as the I2 base station, to be a predetermined value or less. More specifically, if it is assumed that there is no step S24 and the terminal significantly interferes with the respective base stations I2 and I3 of the two adjacent cells, the terminal may not interfere with the base station I2 by adopting Step S23, i.e., by assigning the whispering time region of the I2 base station to the terminal so that only the terminal and terminals located at the center portion of the I2 base station perform simultaneous transmission and reception. There is no method to eliminate the interference with the base station I3 of the remaining cell. Accordingly, it is desirable to lower the transmit power of the terminal in order to reduce the interference with the I3 base station.

FIG. 7 illustrates another exemplary step of determining a time region in the method of controlling base stations according to the first embodiment of the present invention.

Referring to FIG. 7, Step of determining the time region includes Step S31 of comparing path loss L2 in an I2 base station to a first threshold value ("TH1"); Step S32 of assigning a whispering time region of an I1 base station to the terminal when L2 is greater than the first threshold value; and Step S33 of assigning a whispering time region of the I2 base station to the terminal when L2 is smaller than the first threshold value. The step of determining the time region may further include Step S34 of, when L2 is smaller than the first threshold value, comparing path loss L3 in an I3 base station to the first threshold value and, when L3 is smaller than the first threshold value, reducing transmit power of the terminal by a difference between the first threshold value and L3.

This method is especially effective when the transmit power of the base station is substantially fixed and may be lowered if necessary. Advantageously, by the method further including Step S34, it is possible to lower the path loss related to the I3 base station of a terminal, which interferes with the I3 base station as well as the I2 base station, to be a predetermined value or less.

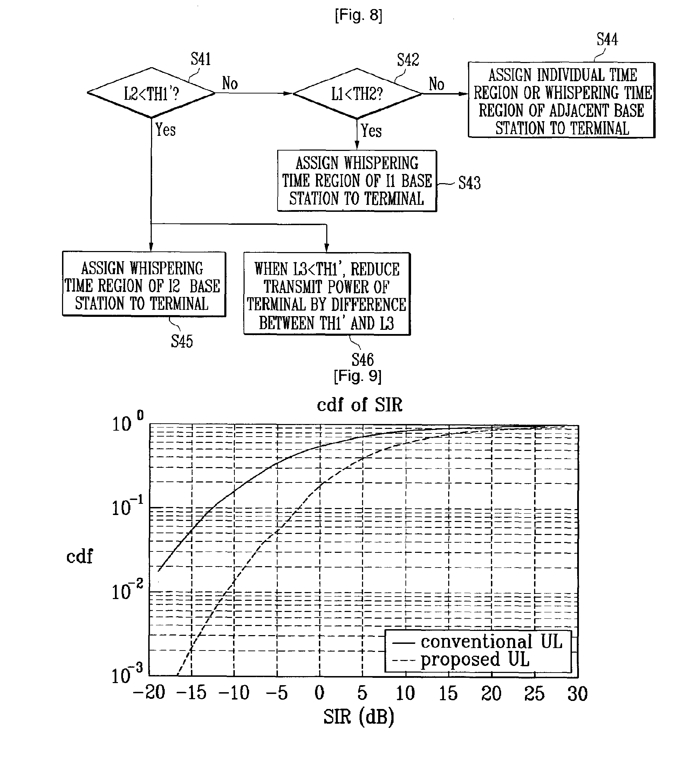

FIG. 8 illustrates yet another exemplary step of determining a time region in the method of controlling base stations according to the first embodiment of the present invention.

Referring to FIG. 8, Step of determining the time region includes Step S41 of comparing path loss L2 in an I2 base station to a first threshold value ("TH1"); Step S42 of, when L2 is greater than the first threshold value, comparing the path loss L1 in the I1 base station to a second threshold value ("TH2"); Step S43 of, when L1 is smaller than the second threshold value, assigning a whispering time region of the I1 base station to the terminal; Step S44 of, when L1 is greater than the second threshold value, assigning an individual time region or a whispering time region of an adjacent base station to the terminal; and Step S45 of, when L2 is smaller than the first threshold value, assigning a whispering time region of the I2 base station to the terminal. The step of determining the time region may further include Step S46 of, when L2 is smaller than the first threshold value, comparing path loss L3 in an I3 base station to the first threshold value and, when L3 is smaller than the first threshold value, reducing transmit power of the terminal by a difference between the first threshold value and L3.

This method is especially effective when the transmit power of the base station is substantially fixed. Further, by the method further including Step S46, it is possible to lower the interference with the I3 base station of a terminal, which interferes with the I3 base station as well as the I2 base station, to be a predetermined value or less.

Further, from the comparison with the method described in FIG. 7, it can be seen that, by the method represented in FIG. 8 further including Step S44, it is possible to increase a signal to interference ratio of a terminal having great path loss related to the I1 base station by assigning the terminal to the speaking region or individual region. That is, if the path loss depends on distance, two values L1 and L2 are difficult to be simultaneously great. In a shaded environment, the path losses may be both great due to presence of buildings. If the L1 value is greater than the second threshold value, strength of the signal to interference ratio at the I1 base station is low, and consequently, it is not suitable to assign the terminal to the whispering time region of the I1 base station. It is necessary to assign the terminal to an individual time region in which interference from adjacent cells is less or to a whispering time region of the adjacent cell. Here, the individual time region refers to a time region not greatly interfering with adjacent cells and is a remaining region other than time regions of the whispering cells and adjacent cells in a random cell structure.

FIG. 9 illustrates a simulation result of an up-link signal to interference ratio (SIR) in a cumulative distribution function (CDF) at a center cell under seven cells represented in FIG. 3 according to a method for determining the time region represented in FIG. 7.

Referring to FIG. 9, a conventional scheme uses avoidance of interference without dividing a region like simple OFDMA while the proposed scheme divides a time region based on only the first threshold value TH1 and uses only avoidance of interference. In one simulation, one terminal in a center cell is created at any position and then a number of terminals in adjacent cells are created at several times to obtain respective signal to interference ratios. A relatively small value corresponding to 95% or higher of the obtained values is taken as a representative stable value. This value is defined as a stably predicted signal to interference ratio value for that terminal. This process is repeated to obtain the result through several creations of terminals in the center cell. From the simulation result, it can be seen that the proposed scheme provides significantly improved performance. For example, a ratio of terminals having the signal to interference ratio of -5dB or less is on the order of 35% in the conventional scheme while it is on the order of 5% in the proposed scheme. It can be seen that the proposed scheme significantly reduces the ratio of terminals having a low signal to interference ratio. The result represented in FIG. 9 was obtained without application of interference averaging in the divided regions. In the present invention, the avoidance of interference is achieved in the divided regions, and thus, there is no limitation to processing of interference in the divided regions. Accordingly, if adaptive modulation and coding (AMC) is not performed on the basis of a small resource within the region, it is preferable to adopt interference averaging through spread spectrum such as frequency hopping.

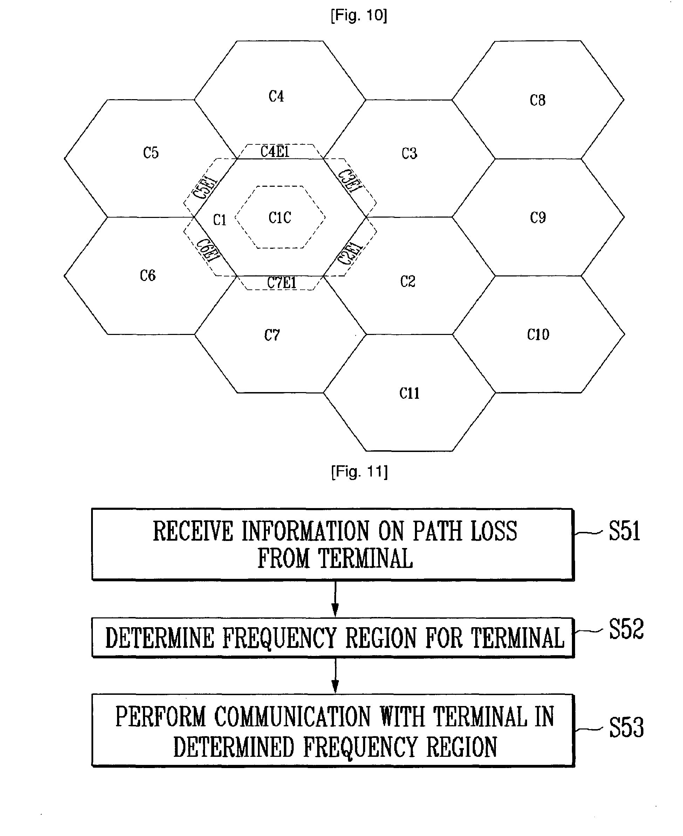

FIG. 10 illustrates a concept of a method of controlling base stations according to a second embodiment of the present invention. In FIG. 10, there are represented eleven cells and a base station is assumed to be at a center of each cell.

Referring to FIG. 10, terminals located at the center portion C1C of the first cell C1 and terminals located at boundary portions C2E1 to C7E1, adjacent to the first cell C1, of the second to seventh cells C2 to C7 use the same frequency to perform communication with the base station of the cell to which each terminal belongs. While the terminals located at the boundary portions C2E1 to C7E1, adjacent to the first cell C1, of the second to seventh cells C2 to C7 cause considerable interference due to close proximity to the base station of the first cell C1, terminals located at the center portion C1C of the first cell C1 may obtain a sufficient signal to interference ratio because of very excellent signal quality. As a result, the terminals located at the center portion C1C of the first cell C1 and the terminals located at the boundary portions C2E1 to C7E1, adjacent to the first cell C1, of the second to seventh cells C2 to C7 can transmit signals to the base stations without suffering significant degradation of performance that is caused by inter-cell interference.

Similarly, the terminals located at the center portion of the second cell C2 and terminals located at the boundary portions, adjacent to the second cell C2, of the first, third, seventh, ninth, tenth and eleventh cells C1, C3, C7, C9, C10 and C11 use the same frequency to perform communication with base stations to which the respective terminals belong. Of course, the terminals located at the center portion of the second cell C2 and the terminals located at the center portion of the first cell C1 use a different frequency. It is possible for the respective terminals to transmit signals to the base stations with suffering less inter-cell interference.

Further, the terminals located at the center portion of the third cell C3 and terminals located at boundary portions of cells adjacent to the third cell C3 are assigned the same frequency for communication. The fourth to seventh cells C4 to C7 are assigned a frequency for communication in a similar manner. Of course, terminals located at the center portions of the first to seventh cells use a different frequency for communication.

By performing communication in such a manner, it is possible to suppress inter-cell interference. Further, the terminals located at the center portion C1C of the first cell C1 and terminals located at the boundary portion C2E1, adjacent to the first cell C1, of the second cell C2 use the same frequency for communication, thereby allowing sufficient frequencies to be assigned to the terminals located at the boundary portions.

FIG. 11 is a flowchart of a method of controlling base stations according to the second embodiment of the present invention.

Referring to FIG. 11, a method of controlling base stations includes Step S51 of receiving information on path loss from a terminal, Step S52 of determining a frequency (resource) region for the terminal, and Step S53 of performing communication with the terminal in the determined frequency region.

The step S51 of receiving information on path loss related to a terminal is similar to Step S11 of FIG. 5, and detailed description thereof will be omitted.

In Step S52 of determining a frequency region for the terminal, the base station uses path loss information related to the served terminal to assign the frequency region to the terminal. In assigning the frequency region, terminals located in cells adjacent to and significantly interfering with a predetermined cell and terminals located in the predetermined cell and having sufficient signal strength are assigned the same frequency region. For convenience of illustration, the frequency region assigned to the terminals located in the predetermined cell and relatively less interfering with terminals in adjacent cells is called a whispering frequency region of the cell.

In Step S53 of performing communication in the determined frequency region, the base station performs communication with the terminal within the frequency region to which the terminal belongs. When six cells are located in the vicinity of one cell as represented in FIG. 10, the cell is divided into seven regions, i.e., one region in which a signal to interference ratio is great since signal strength is great despite the presence of interference with adjacent cells, and six regions interfering with six neighboring cells. One cell is divided into at least seven frequency regions and the regions of the cell are assigned a different frequency.

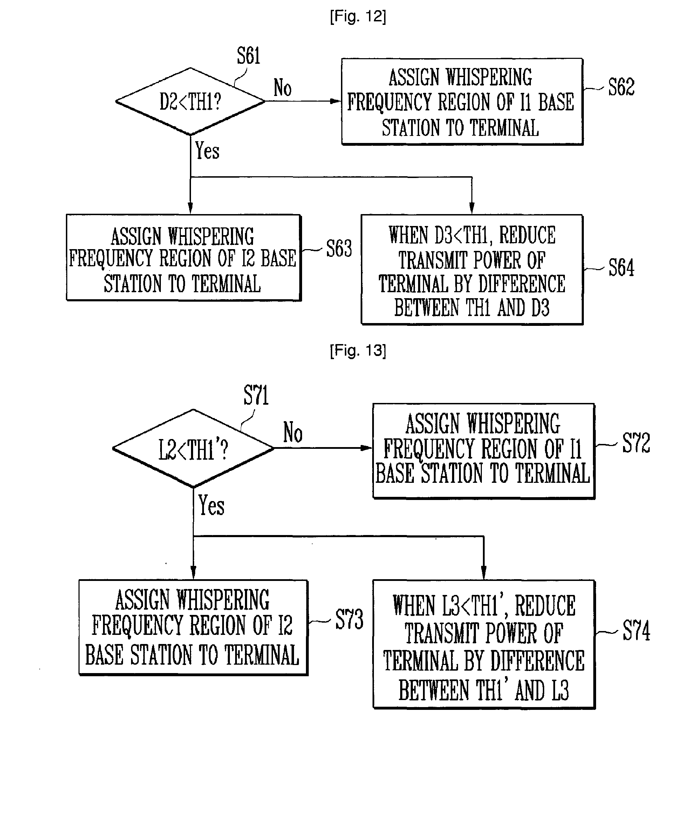

FIG. 12 illustrates an exemplary step of determining a frequency region in the method of controlling base stations according to the second embodiment of the present invention.

Referring to FIG. 12, Step of determining the frequency region includes Step S61 of comparing a difference ("D2") in path loss between an I1 base station and an I2 base station to a first threshold value ("TH1"); Step S62 of, when D2 is greater than the first threshold value, assigning a whispering frequency region of the I1 base station to the terminal; and Step S63 of, when D2 is smaller than the first threshold value, assigning a whispering frequency region of the I2 base station to the terminal. The step of determining the frequency region may further include Step S64 of, when D2 is smaller than the first threshold value, comparing a difference ("D3") in path loss between the I1 base station and an I3 base station to the first threshold value and, when D3 is smaller than the first threshold value, reducing transmit power of the terminal by a difference between the first threshold value and D3.

FIG. 13 illustrates another exemplary step of determining a frequency region in the method of controlling base stations according to the second embodiment of the present invention.

Referring to FIG. 13, Step of determining the frequency region includes Step S71 of comparing path loss L2 in an I2 base station to a first threshold value ("TH1"); Step S72 of, when L2 is greater than the first threshold value, assigning a whispering frequency region of the I1 base station to the terminal; and Step S73 of, when L2 is smaller than the first threshold value, assigning a whispering frequency region of the I2 base station to the terminal. The step of determining a frequency region may further include Step S74 of, when L2 is smaller than the first threshold value, comparing path loss L3 in an I3 base station to the first threshold value and, when L3 is smaller than the first threshold value, reducing transmit power of the terminal by a difference between the first threshold value and L3.

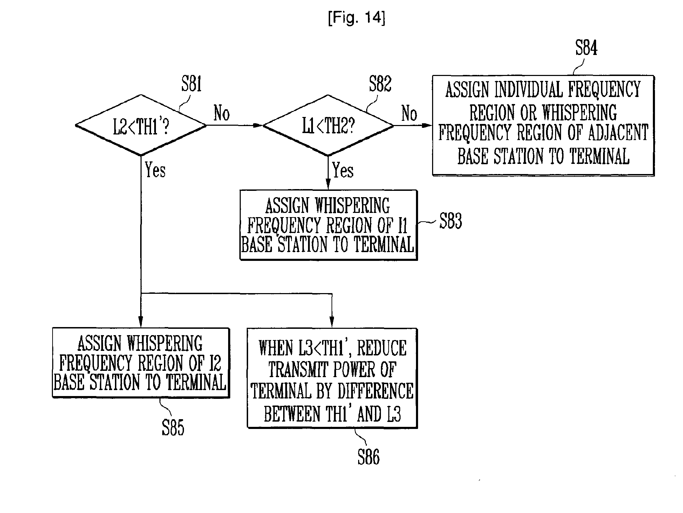

FIG. 14 illustrates yet another exemplary step of determining a frequency region in the method of controlling base stations according to the second embodiment of the present invention.

Referring to FIG. 14, Step of determining the frequency region includes Step S81 of comparing path loss L2 in an I2 base station to a first threshold value ("TH1"); Step S82 of, when L2 is greater than the first threshold value, comparing the path loss L1 in the I1 base station to a second threshold value ("TH2"); Step S83 of, when L1 is smaller than the second threshold value, assigning a whispering frequency region of the I1 base station to the terminal; Step S84 of, when L1 is greater than the second threshold value, assigning an individual frequency region or a whispering frequency region of an adjacent base station to the terminal; and Step S85 of, when L2 is smaller than the first threshold value, assigning a whispering frequency region of the I2 base station to the terminal. The step of determining the frequency region may further include Step S86 of, when L2 is smaller than the first threshold value, comparing path loss L3 in an I3 base station to the first threshold value and, when L3 is smaller than the first threshold value, reducing transmit power of the terminal by a difference between the first threshold value and L3.

In the method of controlling base stations according to the second embodiment of the present invention, which has been described with reference to FIGS. 10 to 14, one cell is divided in several regions and each region is assigned a different frequency for avoidance of inter-cell interference. In the method of controlling base stations according to the third embodiment of the present invention, one cell is divided into several regions and each region is assigned a different code for avoidance of inter-cell interference. The code indicates, for example, the same orthogonal code or frequency hopping pattern between cells. The method of controlling base stations according to the third embodiment of the present invention is the same as that according to the second embodiment of the present invention except that a code region is used instead of a frequency region, and detailed description thereof will be omitted.

With the method of controlling base stations according to the present invention, it is possible to obtain a great signal to interference ratio, to provide a gain over all data rates of each cell, and to increase a data rate for users at a cell boundary where signal quality is very poor by suppressing interference with the users.

Further, with the method of controlling base stations according to the present invention, it is possible to efficiently utilize available resources by assigning sufficient time, frequency or code to terminals located at boundary portions of cells.

Although the present invention has been described with reference to certain exemplary embodiments thereof, it will be understood by those skilled in the art that a variety of modifications and variations may be made to the present invention without departing from the scope of the present invention defined in the appended claims, and their equivalents.

**Claims**

1. A method of controlling base stations, each base station covering a cell and being assigned a plurality of time slots, each cell defining an inner region and a plurality of outer regions surrounding the inner region, the method comprising:

   receiving information on path loss from a target terminal disposed in a first cell covered by a first base station (S11), the first cell being surrounded by a plurality of cells covered by base stations different from the first base station;
   determining a time region for the target terminal based on the path loss information (S12), wherein the first base station has a plurality of time regions assigned to a plurality of terminals located in the first cell, the plurality of time regions including a first time region associated with an inner region of the first cell and a plurality of second time regions associated with outer regions of the first cell, each second time region corresponding to a first time region of an inner region of one of the cells surrounding the first cell; and
   performing communication with the target terminal within the determined time region (S13).

2. The method according to claim 1, wherein the determining step (S12) comprises:

   comparing a difference in path loss between the first base station in the first cell to which the target terminal belongs and a second base station which is the most significantly interfered with the target terminal to a predetermined threshold value (S21), the second base station being one of the base stations covering the plurality of cells surrounding the first cell;
   assigning the first time region of the first base station to the target terminal if the difference in the path loss is greater than the threshold value (S22); and
   assigning a first time region of the second base station to the target terminal if the difference in the path loss is smaller than the threshold value (S23).

3. The method according to claim 2, wherein the determining step (S12) further comprises, if the difference in path loss is smaller than the threshold value, comparing a difference in path loss between the first base station and a third base station which is the second most significantly interfered with the target terminal to the threshold value, the third base station being one of the base stations covering the plurality of cells surrounding the first cell and
   wherein if the difference in the path loss between the first base station and the third base station is smaller than the threshold value, reducing transmit power of the target terminal by a difference between the difference in the path loss between the first base station and the third base station and the threshold value (S24).

4. The method according to claim 1, wherein the determining step (S12) comprises:

   comparing path loss in a second base station which is the most significantly interfered with the target terminal to a predetermined threshold value (S31), the second base station being one of the base stations covering the plurality of cells surrounding the first cell;
   if the path loss is greater than the threshold value, assigning to the target terminal the first time region of the first base station in the first cell to which the target terminal belongs (S32); and
   if the path loss is smaller than the threshold value, assigning a first time region of the second base station to the target terminal (S33).

5. The method according to claim 4, wherein the determining step (S12) comprises, if the path loss is smaller than the threshold value, comparing path loss in a third base station which is the second most significantly interfered with the target terminal to the threshold value, the third base station being one of the base stations covering the plurality of cells surrounding the first cell, and
   wherein if the path loss in the third base station is smaller than the threshold value, reducing transmit power of the target terminal by a difference between the path loss in the third base station and the threshold value (S34).

6. The method according to claim 1, wherein the determining step (S12) comprises:

   comparing path loss in a second base station which is the most significantly interfered with the target terminal to a first threshold value (S41), the second base station being one of the base stations covering the plurality of cells surrounding the first cell;
   if the path loss in the second base station is greater than the first threshold value, comparing path loss in the first base station in the first cell to which the target terminal belongs, to a second threshold value (S42);
   if the path loss in the first base station is smaller than the second threshold value, assigning the first time region of the first base station to the target terminal (S43);

if the path loss in the first base station is greater than the second threshold value, assigning to the target terminal either an individual time region or a first time region of the base station adjacent to the first base station (S44); and
if the path loss in the second base station is smaller than the first threshold value, assigning a first time region of the second base station to the target terminal (S45).

7. The method according to claim 6, wherein the determining step (S12) further comprises, if the path loss in the second base station is smaller than the first threshold value, comparing path loss in a third base station which is the second most significantly interfered with the target terminal to the first threshold value, the third base station being one of the base stations covering the plurality of cells surrounding the first cell, and, wherein if the path loss in the third base station is smaller than the first threshold value, reducing transmit power of the target terminal by a difference between the path loss in the third base station and the first threshold value (S46).

8. The method according to claim 1, wherein the path loss information includes information on path loss of a signal transmitted from the first base station in the first cell to which the target terminal belongs to the target terminal and path loss of signals transmitted from the base stations adjacent to the first base station to the target terminal.

9. The method according to claim 8, wherein the signal transmitted from the base station is a pilot signal.

10. The method according to claim 1, wherein the path loss information is forwarded to the base station in the form of an inter-cell interference vector.

11. The method according to claim 1, wherein the communication is an up-link communication.

12. The method according to claim 1, wherein the number of the time slots are seven, the first time region is assigned to terminals located at the inner region of the first cell, and second to seventh time regions are assigned to terminals located at second to seventh outer regions of the first cell that are adjacent to cells corresponding to six base stations disposed close to the first base station in the first cell.

13. A method of controlling base stations, the method comprising:

receiving information on path loss from a target terminal disposed in a first cell covered by a first base station (S51);
determining a frequency region for the target terminal based on the path loss information (S52), wherein the first base station has a plurality of frequency regions assigned to terminals located in the first cell, and the plurality of frequency regions includes a first frequency region assigned to terminals located in a central portion of the first cell and a plurality of second frequency regions assigned to terminals located at boundary portions surrounding the central portion, each second frequency region corresponding to a first frequency region assigned to a central portion of one of base stations adjacent to the first base station; and
performing communication with the target terminal within the determined frequency region (S53).

14. The method according to claim 13, wherein the determining step (S52) comprises:

comparing a difference in path loss between the first base station in the first cell to which the target terminal belongs and a second base station which is the most significantly interfered with the target terminal to a predetermined threshold value (S61), the second base station being one of the base stations adjacent to the first base station;
if the difference in the path loss is greater than the threshold value, assigning the first frequency region of the first base station to the target terminal (S62); and
if the difference in the path loss is smaller than the threshold value, assigning a first frequency region of the second base station to the target terminal (S63).

15. The method according to claim 14, wherein the determining step (S52) further comprises:

if the difference in path loss is smaller than the threshold value, comparing a difference in path loss between the first base station and a third base station which is the second most significantly interfered with the target terminal to the threshold value, the third base station being one of the base stations adjacent to the first base station; and
if the difference in the path loss between the first base station and the third base station is smaller than the threshold value, reducing transmit power of the target terminal by a difference between the difference in the path loss between the first base station and the third base station and the threshold value (S64).

16. The method according to claim 13, wherein the determining step (S52) comprises:

comparing path loss in a second base station which is the most significantly interfered with the target terminal to a predetermined threshold value (S71), the second base station being one of the base stations adjacent to the first base station;
if the path loss is greater than the threshold value, assigning to the target terminal the first frequency region of the first base station in the first cell to which the target terminal belongs (S72); and
if the path loss is smaller than the threshold value, assigning a first frequency region of the second base station to the target terminal (S73).

17. The method according to claim 16, wherein the determining step (S52) comprises:

if the path loss is smaller than the threshold value, comparing path loss in a third base station which is the second most significantly interfered with the target terminal to the threshold value, the third base station being one of the base stations adjacent to the first base station; and
if the path loss in the third base station is smaller than the threshold value, reducing transmit power of the target terminal by a difference between the path loss in the third base station and the threshold value (S74).

18. The method according to claim 13, wherein the determining step (S52) comprises:

comparing path loss in a second base station which is the most significantly interfered with the target terminal to a first threshold value (S81), the second base station being one of the base stations adjacent to the first base station;
if the path loss in the second base station is greater than the first threshold value, comparing path loss in the first base station in the first cell to which the terminal belongs, to a second threshold value (S82);
if the path loss in the first base station is smaller than the second threshold value, assigning the first frequency region of the first base station to the target terminal (S83);
if the path loss in the first base station is greater than the second threshold value, assigning to the target terminal either an individual frequency region or a first frequency region of a base station adjacent to the first base station (S84); and
if the path loss in the second base station is smaller than the first threshold value, assigning a first frequency region of the second base station to the target terminal (S85).

19. The method according to claim 18, wherein the determining step (S52) further comprises:

if the path loss in the second base station is smaller than the first threshold value, comparing path loss in a third base station which is the second most significantly interfered with the target terminal to the first threshold value, the third base station being one of the base stations adjacent to the first base station; and
if the path loss in the third base station is smaller than the first threshold value, reducing transmit power of the target terminal by a difference between the path loss in the third base station and the first threshold value (S86).

20. The method according to claim 13, wherein the communication is an up-link communication.

21. A method of controlling base stations, the method comprising:

receiving information on path loss from a target terminal disposed in a first cell covered by a first base station;
determining a code region for the target terminal based on the path loss information, wherein the first base station has a plurality of code regions assigned to terminals located in the first cell, and the plurality of code regions includes a first code region assigned to terminals located in a center portion of the first cell and second to Nth code regions assigned to terminals located in boundary portions surrounding the center portion, the second to Nth code regions corresponding to first code regions of base stations adjacent to the first base station, respectively, the code regions using different codes from each other, and N being a positive integer; and
performing communication with the target terminal within the determined code region.

**Patentansprüche**

1. Verfahren zum Steuern von Basisstationen, wobei jede Basisstation eine Zelle abdeckt und eine Mehrzahl von Zeitschlitzen übertragen bekommt, wobei jede Zelle einen inneren Bereich und eine Mehrzahl von äußeren Bereichen definiert, welche den inneren Bereich umgeben, wobei das Verfahren umfasst:

Empfangen von Information über einen Kanalverlust von einem Zielendgerät (S11), welches sich in einer ersten Zelle befindet, die durch eine erste Basisstation abgedeckt ist, wobei die erste Zelle von einer Mehrzahl von Zellen umgeben ist, die durch Basisstationen abgedeckt sind, welche von der ersten Basisstation verschieden sind;

Bestimmen eines Zeitbereichs für das Zielendgerät basierend auf der Kanalverlust-Information (S12), wobei die erste Basisstation eine Mehrzahl von Zeitbereichen aufweist, die einer Mehrzahl von Endgeräten zugeordnet werden, die sich in der ersten Zelle befinden, wobei die Mehrzahl von Zeitbereichen einen ersten Zeitbereich, der einem inneren Bereich der ersten Zelle zugeordnet wird, und eine Mehrzahl von zweiten Zeitbereichen enthält, die den äußeren Bereichen der ersten Zelle zugeordnet werden, wobei jeder zweite Zeitbereich einem ersten Zeitbereich eines inneren Bereichs von einer der Zellen entspricht, welche die erste Zelle umgeben; und

Durchführen von Kommunikation mit dem Zielendgerät innerhalb des bestimmten Zeitbereichs (S13).

2. Verfahren nach Anspruch 1, wobei der Bestimmungsschritt (S12) umfasst:

Vergleichen einer Differenz im Kanalverlust zwischen der ersten Basisstation in der ersten Zelle, zu welcher das Zielendgerät gehört, und einer zweiten Basisstation, welche am signifikantesten durch das Zielendgerät störend beeinflusst wird, mit einem vorbestimmten Schwellenwert (S21), wobei die zweite Basisstation eine der Basisstationen ist, welche die Mehrzahl von Zellen abdecken, welche die erste Zelle umgeben;

Zuweisen des ersten Zeitbereichs der ersten Basisstation an das Zielendgerät, falls die Differenz in dem Kanalverlust größer als der Schwellenwert ist (S22); und

Zuweisen eines ersten Zeitbereichs der zweiten Basisstation an das Zielendgerät, falls die Differenz in dem Kanalverlust geringer als der Schwellenwert ist (S23).

3. Verfahren nach Anspruch 2, wobei der Bestimmungsschritt (S12) ferner umfasst, falls die Differenz im Kanalverlust geringer als der Schwellenwert ist, Vergleichen einer Differenz im Kanalverlust zwischen der ersten Basisstation und einer dritten Basisstation, welche am zweitsignifikantesten von dem Zielendgerät störend beeinflusst wird, mit dem Schwellenwert, wobei die dritte Basisstation eine der Basisstationen ist, welche die Mehrzahl von Zellen abdecken, welche die erste Zelle umgeben, und wobei, falls die Differenz in dem Kanalverlust zwischen der ersten Basisstation und der dritten Basisstation geringer als der Schwellenwert ist, Reduzieren einer Übertragungsleistung des Zielendgeräts um eine Differenz zwischen der Differenz in dem Kanalverlust zwischen der ersten Basisstation und der dritten Basisstation und dem Schwellenwert (S24).

4. Verfahren nach Anspruch 1, wobei der Bestimmungsschritt (S12) umfasst:

Vergleichen eines Kanalverlusts in einer zweiten Basisstation, welche am signifikantesten von dem Zielendgerät störend beeinflusst wird, mit einem vorbestimmten Schwellenwert (S31), wobei die zweite Basisstation eine der Basisstationen ist, welche die Mehrzahl von Zellen abdecken, welche die erste Zelle umgeben;

falls der Kanalverlust größer als der Schwellenwert ist, Zuweisen des ersten Zeitbereichs der ersten Basisstation in der ersten Zelle, zu welcher das Zielendgerät gehört, an das Zielendgerät (S32); und

falls der Kanalverlust geringer als der Schwellenwert ist, Zuweisen eines ersten Zeitbereichs der zweiten Basisstation an das Zielendgerät (S33).

5. Verfahren nach Anspruch 1, wobei der Bestimmungsschritt (S12) umfasst, falls der Kanalverlust geringer als der Schwellenwert ist, Vergleichen eines Kanalverlusts in einer dritten Basisstation, welche am zweitsignifikantesten von dem Zielendgerät störend beeinflusst wird, mit einem vorbestimmten Schwellenwert, wobei die dritte Basisstation eine der Basisstationen ist, welche die Mehrzahl von Zellen abdecken, welche die erste Zelle umgeben; und wobei, falls der Kanalverlust in der dritten Basisstation geringer als der Schwellenwert ist, Reduzieren einer Übertragungsleistung des Zielendgeräts um eine Differenz zwischen dem Kanalverlust in der dritten Basisstation und dem Schwellenwert (S34).

6. Verfahren nach Anspruch 1, wobei der Bestimmungsschritt (S12) umfasst:

Vergleichen eines Kanalverlusts in einer zweiten Basisstation, welche am signifikantesten von dem Zielendgerät störend beeinflusst wird, mit einem ersten Schwellenwert (S41), wobei die zweite Basisstation eine der Basisstationen ist, welche die Mehrzahl von Zellen abdecken, welche die erste Zelle umgeben;

falls der Kanalverlust in der zweiten Basisstation größer als der erste Schwellenwert ist, Vergleichen eines Kanalverlusts in der ersten Basisstation in der ersten Zelle, zu welcher das Zielendgerät gehört, mit einem zweiten Schwellenwert (S42);

falls der Kanalverlust in der ersten Basisstation geringer als der zweite Schwellenwert ist, Zuweisen des ersten Zeitbereichs der ersten Basisstation an das Zielendgerät (S43);

falls der Kanalverlust in der ersten Basisstation größer als der zweite Schwellenwert ist, Zuweisen entweder eines einzelnen Zeitbereichs oder eines ersten Zeitbereichs der Basisstation, die zur ersten Basisstation benachbart ist, an das Zielendgerät (S44); und

falls der Kanalverlust in der zweiten Basisstation geringer als der erste Schwellenwert ist, Zuweisen eines ersten Zeitbereichs der zweiten Basisstation an das Zielendgerät (S45).

7. Verfahren nach Anspruch 6, wobei der Bestimmungsschritt (S12) ferner umfasst, falls der Kanalverlust in der zweiten Basisstation geringer als der erste Schwellenwert ist, Vergleichen eines Kanalverlusts in einer dritten Basisstation, welches am zweitsignifikantesten von dem Zielendgerät störend beeinflusst wird, mit dem ersten Schwellenwert, wobei die dritte Basisstation eine der Basisstationen ist, welche die Mehrzahl von Zellen abdeckt, welche die erste Zelle umgeben, und wobei, falls der Kanalverlust in der dritten Basisstation geringer als der erste Schwellenwert ist, Reduzieren einer Übertragungsleistung des Zielendgeräts um eine Differenz zwischen dem Kanalverlust in der dritten Basisstation und dem ersten Schwellenwert (S46).

8. Verfahren nach Anspruch 1, wobei die Kanalverlust-Information Information von einem Kanalverlust eines Signals enthält, welches von der ersten Basisstation in der ersten Zelle, zu welcher das Zielendgerät gehört, an das Zielendgerät übertragen wird, und Kanalverlusten von Signalen, die von den Basisstationen, die zur ersten Basisstation benachbart sind, an das Zielendgerät übertragen werden.

9. Verfahren nach Anspruch 8, wobei das Signal, welches von der Basisstation übertragen ist, ein Pilotsignal ist.

10. Verfahren nach Anspruch 1, wobei die Kanalverlust-Information an die Basisstation in der Form eines Zwischen-Zell-Interferenz-Vektors weitergeleitet wird.

11. Verfahren nach Anspruch 1, wobei die Kommunikation eine Uplink-Kommunikation ist.

12. Verfahren nach Anspruch 1, wobei die Zahl der Zeitschlitze sieben ist, wobei der erste Zeitbereich an Endgeräte zugewiesen wird, die sich im inneren Bereich der ersten Zelle befinden, und die zweiten bis siebten Zeitbereiche an Endgeräte zugewiesen werden, die sich in zweiten bis siebten äußeren Bereichen der ersten Zelle befinden, die zu Zellen benachbart sind, welche zu den sechs Basisstationen gehören, die nah zur ersten Basisstation in der ersten Zelle angeordnet sind.

13. Verfahren zum Steuern von Basisstationen, wobei das Verfahren umfasst:

Empfangen von Information über einen Kanalverlust von einem Zielendgerät (S51), welches sich in einer ersten Zelle befindet, die durch eine erste Basisstation abgedeckt ist;
Bestimmen eines Frequenzbereichs für das Zielendgerät basierend auf der Kanalverlust-Information (S52), wobei die erste Basisstation eine Mehrzahl von Frequenzbereichen aufweist, die einer Mehrzahl von Endgeräten zugeordnet werden, die sich in der ersten Zelle befinden, und wobei die Mehrzahl von Frequenzbereichen einen ersten Frequenzbereich, der einem zentralen Bereich der ersten Zelle zugeordnet wird, und eine Mehrzahl von zweiten Frequenzbereichen enthält, die den Grenzbereichen der ersten Zelle zugeordnet werden, die den zentralen Bereich umgeben, wobei jeder zweite Frequenzbereich einem ersten Frequenzbereich entspricht, der einem zentralen Bereich von einer der Basisstationen zugewiesen ist, die zur ersten Basisstation benachbart sind; und
Durchführen von Kommunikation mit dem Zielendgerät innerhalb des bestimmten Frequenzbereichs (S53).

14. Verfahren nach Anspruch 13, wobei der Bestimmungsschritt (S12) umfasst:

Vergleichen einer Differenz im Kanalverlust zwischen der ersten Basisstation in der ersten Zelle, zu welcher das Zielendgerät gehört, und einer zweiten Basisstation, welche am signifikantesten von dem Zielendgerät störend beeinflusst wird, mit einem vorbestimmten Schwellenwert (S61), wobei die zweite Basisstation eine der Basisstationen ist, welche zur ersten Basisstation benachbart sind;
falls die Differenz in dem Kanalverlust größer als der Schwellenwert ist, Zuweisen des ersten Frequenzbereichs der ersten Basisstation an das Zielendgerät (S62); und
falls die Differenz in dem Kanalverlust geringer als der Schwellenwert ist, Zuweisen eines ersten Frequenzbereichs der zweiten Basisstation an das Zielendgerät (S63).

15. Verfahren nach Anspruch 14, wobei der Bestimmungsschritt (S52) ferner umfasst:

falls die Differenz im Kanalverlust geringer als der Schwellenwert ist, Vergleichen einer Differenz im Kanalverlust zwischen der ersten Basisstation und einer dritten Basisstation, welche am zweitsignifikantesten von dem Zielendgerät störend beeinflusst wird, mit dem Schwellenwert, wobei die dritte Basisstation eine der Basisstationen ist, welche zur ersten Basisstation benachbart sind; und

falls die Differenz in dem Kanalverlust zwischen der ersten Basisstation und der dritten Basisstation geringer als der Schwellenwert ist, Reduzieren einer Übertragungsleistung des Zielendgeräts um eine Differenz zwischen der Differenz in dem Kanalverlust zwischen der ersten Basisstation und der dritten Basisstation und dem Schwellenwert (S64).

16. Verfahren nach Anspruch 13, wobei der Bestimmungsschritt (S52) ferner umfasst:

Vergleichen eines Kanalverlusts in einer zweiten Basisstation, welche am signifikantesten von dem Zielendgerät störend beeinflusst wird, mit einem vorbestimmten Schwellenwert (S71), wobei die zweite Basisstation eine der Basisstationen ist, welche zur ersten Basisstation benachbart sind;

falls der Kanalverlust größer als der Schwellenwert ist, Zuweisen des ersten Frequenzbereichs der ersten Basisstation in der ersten Zelle, zu welcher das Zielendgerät gehört, an das Zielendgerät (S72); und

falls der Kanalverlust geringer als der Schwellenwert ist, Zuweisen eines ersten Frequenzbereichs der zweiten Basisstation an das Zielendgerät (S73).

17. Verfahren nach Anspruch 16, wobei der Bestimmungsschritt (S52) umfasst:

falls der Kanalverlust geringer als der Schwellenwert ist, Vergleichen eines Kanalverlusts in der dritten Basisstation, welche am zweitsignifikantesten von dem Zielendgerät störend beeinflusst wird, mit einem Schwellenwert, wobei die dritte Basisstation eine der Basisstationen ist, welche zur ersten Basisstation benachbart sind; und

falls der Kanalverlust der dritten Basisstation geringer als der Schwellenwert ist, Reduzieren einer Übertragungsleistung des Zielendgeräts um eine Differenz zwischen dem Kanalverlust in der dritten Basisstation und dem Schwellenwert (S74).

18. Verfahren nach Anspruch 13, wobei der Bestimmungsschritt (S52) umfasst:

Vergleichen eines Kanalverlusts in einer zweiten Basisstation, welche am signifikantesten von dem Zielendgerät störend beeinflusst wird, mit einem ersten Schwellenwert (S81), wobei die zweite Basisstation eine der Basisstationen ist, welche zur ersten Basisstation benachbart sind;

falls der Kanalverlust in der zweiten Basisstation größer als der erste Schwellenwert ist, Vergleichen eines Kanalverlusts in der ersten Basisstation in der ersten Zelle, zu welcher das Zielendgerät gehört, mit einem zweiten Schwellenwert (S82);

falls der Kanalverlust in der ersten Basisstation geringer als der zweite Schwellenwert ist, Zuweisen des ersten Frequenzbereichs der ersten Basisstation an das Zielendgerät (S83);

falls der Kanalverlust in der ersten Basisstation größer als der zweite Schwellenwert ist, Zuweisen entweder eines einzelnen Frequenzbereichs oder eines ersten Frequenzbereichs einer Basisstation, die zur ersten Basisstation benachbart ist, an das Zielendgerät (S84); und

falls der Kanalverlust in der zweiten Basisstation geringer als der erste Schwellenwert ist, Zuweisen eines ersten Frequenzbereichs der zweiten Basisstation an das Zielendgerät (S85).

19. Verfahren nach Anspruch 18, wobei der Bestimmungsschritt (S52) ferner umfasst:

falls der Kanalverlust in der zweiten Basisstation geringer als der erste Schwellenwert ist, Vergleichen eines Kanalverlusts in einer dritten Basisstation, welches am zweitsignifikantesten von dem Zielendgerät störend beeinflusst wird, mit dem ersten Schwellenwert, wobei die dritte Basisstation eine der Basisstationen ist, welche zur ersten Basisstation benachbart sind; und

falls der Kanalverlust in der dritten Basisstation geringer als der erste Schwellenwert ist, Reduzieren einer Übertragungsleistung des Zielendgeräts um eine Differenz zwischen dem Kanalverlust in der dritten Basisstation und dem ersten Schwellenwert (S86).

20. Verfahren nach Anspruch 13, wobei die Kommunikation eine Uplink-Kommunikation ist.

21. Verfahren zum Steuern von Basisstationen, wobei das Verfahren umfasst:

Empfangen von Information über einen Kanalverlust von einem Zielendgerät, welches sich in einer ersten Zelle befindet, die von einer ersten Basisstation abgedeckt ist;

Bestimmen eines Codebereichs für das Zielendgerät basierend auf der Kanalverlust-Information, wobei die erste Basisstation eine Mehrzahl von Codebereichen aufweist, die Endgeräten zugewiesen werden, die sich in der ersten Zelle befinden, und die Mehrzahl von Codebereichen einen ersten Codebereich, der Endgeräten zugewiesen wird, die sich in einem zentralen Bereich der ersten Zelle befinden, und zweite bis N-te Codebereiche enthalten, die Endgeräten zugewiesen werden, die sich in Grenzbereichen befinden, welche den zentralen Bereich umgeben, wobei der zweite bis N-te Codebereich den ersten Codebereichen der Basisstationen entsprechen, die jeweils der ersten Basisstation benachbart sind, wobei die Codebereiche unterschiedliche Codes verwenden und N ein positiver Integer ist; und

Durchführen von Kommunikation mit dem Zielendgerät in dem vorbestimmten Codebereich.

## Revendications

1.  Procédé de commande de stations de base, chaque station de base couvrant une cellule et se voyant affecter une pluralité de tranches de temps, chaque cellule définissant une zone interne et une pluralité de zones externes environnant la zone interne, le procédé comportant :

    la réception d'informations sur un affaiblissement de propagation à partir d'un terminal cible localisé dans une première cellule couverte par une première station de base (S11), la première cellule étant entourée par une pluralité de cellules couvertes par des stations de base distinctes de la première station de base ;
    la détermination d'une zone temporelle pour le terminal cible sur la base des informations sur l'affaiblissement de propagation (S12), dans lequel la première station de base présente une pluralité de zones temporelles affectées à une pluralité de terminaux localisés dans la première cellule, la pluralité de zones temporelles incluant une première zone temporelle associée à une zone interne de la première cellule et une pluralité de secondes zones temporelles associées à des zones externes de la première cellule, chaque seconde zone temporelle correspondant à une première zone temporelle d'une zone interne d'une des cellules environnant la première cellule ; et
    la mise en oeuvre de la communication avec le terminal cible au sein de la zone temporelle déterminée (S13).

2.  Procédé selon la revendication 1, dans lequel l'étape de détermination (S12) comporte :

    la comparaison d'une différence en matière d'affaiblissement de propagation entre la première station de base dans la première cellule à laquelle le terminal cible appartient et une deuxième station de base, qui est la station subissant le brouillage le plus significatif avec le terminal cible, à une valeur seuil prédéterminée (S21), la deuxième station de base étant l'une des stations de base couvrant la pluralité de cellules environnant la première cellule ;
    l'affectation de la première zone temporelle de la première station de base au terminal cible si la différence en matière d'affaiblissement de propagation est supérieure à la valeur seuil (S22) ; et
    l'affectation d'une première zone temporelle de la deuxième station de base au terminal cible si la différence en matière d'affaiblissement de propagation est inférieure à la valeur seuil (S23).

3.  Procédé selon la revendication 2, dans lequel l'étape de détermination (S12) comporte en outre, si la différence en matière d'affaiblissement de propagation est inférieure à la valeur seuil, la comparaison d'une différence en matière d'affaiblissement de propagation entre la première station de base et une troisième station de base qui est la deuxième station subissant le brouillage le plus significatif avec le terminal cible à la valeur seuil, la troisième station de base étant l'une des stations de base couvrant la pluralité de cellules environnant la première cellule ; et
    dans lequel si la différence en matière d'affaiblissement de propagation entre la première station de base et la troisième station de base est inférieure à la valeur seuil, la réduction de la puissance d'émission du terminal cible, d'une différence entre la différence en matière d'affaiblissement de propagation entre la première station de base et la troisième station de base et la valeur seuil (S24).

4.  Procédé selon la revendication 1, dans lequel l'étape de détermination (S12) comporte :

    la comparaison de l'affaiblissement de propagation dans une deuxième station de base, qui est la station subissant le brouillage le plus significatif avec le terminal cible, à une valeur seuil prédéterminée (S31), la deuxième station de base étant l'une des stations de base couvrant la pluralité de cellules environnant la première cellule ;
    si l'affaiblissement de propagation est supérieur à la valeur seuil, l'affectation, au terminal cible, de la première zone temporelle de la première station de base dans la première cellule à laquelle le terminal cible appartient (S32) ; et
    si l'affaiblissement de propagation est inférieur à la valeur seuil, l'affectation d'une première zone temporelle de la deuxième station de base au terminal cible (S33).

5.  Procédé selon la revendication 4, dans lequel l'étape de détermination (S12) comporte, si l'affaiblissement de propagation est inférieur à la valeur seuil, la comparaison de l'affaiblissement de propagation dans une troisième station de base, qui est la deuxième station subissant le brouillage le plus significatif avec le terminal cible, à la valeur seuil, la troisième station de base étant l'une des stations de base couvrant la pluralité de cellules environnant la première cellule ; et

dans lequel si l'affaiblissement de propagation dans la troisième station de base est inférieur à la valeur seuil, la réduction de la puissance d'émission du terminal cible, d'une différence entre l'affaiblissement de propagation dans la troisième station de base et la valeur seuil (S34).

6. Procédé selon la revendication 1, dans lequel l'étape de détermination (S12) comporte :

la comparaison de l'affaiblissement de propagation dans une deuxième station de base, qui est la station subissant le brouillage le plus significatif avec le terminal cible à une première valeur seuil (S41), la deuxième station de base étant l'une des stations de base couvrant la pluralité de cellules environnant la première cellule ;

si l'affaiblissement de propagation dans la deuxième station de base est supérieur à la première valeur seuil, la comparaison de l'affaiblissement de propagation dans la première station de base au sein de la première cellule à laquelle le terminal cible appartient, à une seconde valeur seuil (S42) ;

si l'affaiblissement de propagation dans la première station de base est inférieur à la seconde valeur seuil, l'affectation de la première zone temporelle de la première station de base au terminal cible (S43) ;

si l'affaiblissement de propagation dans la première station de base est supérieur à la seconde valeur seuil, l'affectation au terminal cible d'une zone temporelle individuelle ou d'une première zone temporelle de la station de base adjacente à la première station de base (S44) ; et

si l'affaiblissement de propagation dans la deuxième station de base est inférieur à la première valeur seuil, l'affectation d'une première zone temporelle de la deuxième station de base au terminal cible (S45).

7. Procédé selon la revendication 6, dans lequel l'étape de détermination (S12) comporte en outre, si l'affaiblissement de propagation dans la deuxième station de base est inférieur à la première valeur seuil, la comparaison de l'affaiblissement de propagation dans une troisième station de base, qui est la deuxième station subissant le brouillage le plus significatif avec le terminal cible, à la première valeur seuil, la troisième station de base étant l'une des stations de base couvrant la pluralité de cellules environnant la première cellule, et, dans lequel si l'affaiblissement de propagation dans la troisième station de base est inférieur à la première valeur seuil, la réduction de la puissance d'émission du terminal cible, d'une différence entre l'affaiblissement de propagation dans la troisième station de base et la première valeur seuil (S46).

8. Procédé selon la revendication 1, dans lequel les informations sur l'affaiblissement de propagation incluent des informations sur un affaiblissement de propagation d'un signal transmis de la première station de base dans la première cellule à laquelle le terminal cible appartient au terminal cible, et sur l'affaiblissement de propagation de signaux transmis des stations de base adjacente à la première station de base au terminal cible.

9. Procédé selon la revendication 8, dans lequel le signal transmis à partir de la station de base est un signal pilote.

10. Procédé selon la revendication 1, dans lequel les informations sur l'affaiblissement de propagation sont acheminées à la station de base sous la forme d'un vecteur de brouillage entre cellules.

11. Procédé selon la revendication 1, dans lequel la communication est une communication en liaison montante.

12. Procédé selon la revendication 1, dans lequel le nombre de tranches de temps est égal à sept ; la première zone temporelle est affectée à des terminaux localisés au niveau de la zone interne de la première cellule, et les deuxièmes à septièmes zones temporelles sont affectées à des terminaux localisés au niveau des deuxièmes à septièmes zones externes de la première cellule qui sont adjacentes à des cellules correspondant à six stations de base situées à proximité de la première station de base dans la première cellule.

13. Procédé de commande de stations de base, le procédé comportant :

la réception d'informations sur un affaiblissement de propagation à partir d'un terminal cible localisé dans une première cellule couverte par une première station de base (S51) ;

la détermination d'une zone fréquentielle pour le terminal cible sur la base des informations sur l'affaiblissement de propagation (S52), dans lequel la première station de base présente une pluralité de zones fréquentielles affectées à des terminaux localisés dans la première cellule, et la pluralité de zones fréquentielles inclut une première zone fréquentielle affectée à des terminaux localisés dans une partie centrale de la première cellule et une pluralité de secondes zones fréquentielles affectées à des terminaux localisés au niveau de parties périphériques environnant la partie centrale, chaque seconde zone fréquentielle correspondant à une première zone fréquentielle affectée à une partie centrale d'une station des stations de base adjacentes à la première station de base ; et

la mise en oeuvre de la communication avec le terminal cible au sein de la zone fréquentielle déterminée (S53).

14. Procédé selon la revendication 13, dans lequel l'étape de détermination (S52) comporte :

la comparaison d'une différence en matière d'affaiblissement de propagation entre la première station de base dans la première cellule à laquelle le terminal cible appartient et une deuxième station de base, qui est la station subissant le brouillage le plus significatif avec le terminal cible, à une valeur seuil prédéterminée (S61), la deuxième station de base étant l'une des stations de base adjacentes à la première station de base ;

si la différence en matière d'affaiblissement de propagation est supérieure à la valeur seuil, l'affectation de la première zone fréquentielle de la première station de base au terminal cible (S62) ; et

si la différence en matière d'affaiblissement de propagation est inférieure à la valeur seuil, l'affectation d'une première zone fréquentielle de la deuxième station de base au terminal cible (S63).

15. Procédé selon la revendication 14, dans lequel l'étape de détermination (S52) comporte en outre :

si la différence en matière d'affaiblissement de propagation est inférieure à la valeur seuil, la comparaison d'une différence en matière d'affaiblissement de propagation entre la première station de base et une troisième station de base qui est la deuxième station subissant le brouillage le plus significatif avec le terminal cible, à la valeur seuil ; la troisième station de base étant l'une des stations de base adjacentes à la première station de base ;

si la différence en matière d'affaiblissement de propagation entre la première station de base et la troisième station de base est inférieure à la valeur seuil, la réduction de la puissance d'émission du terminal cible, d'une différence entre la différence en matière d'affaiblissement de propagation entre la première station de base et la troisième station de base et la valeur seuil (S64).

16. Procédé selon la revendication 13, dans lequel l'étape de détermination (S52) comporte :

la comparaison de l'affaiblissement de propagation dans une deuxième station de base, qui est la station subissant le brouillage le plus significatif avec le terminal cible, à une valeur seuil prédéterminée (S71), la deuxième station de base étant l'une des stations de base adjacentes à la première station de base ;

si l'affaiblissement de propagation est supérieur à la valeur seuil, l'affectation, au terminal cible, de la première zone fréquentielle de la première station de base dans la première cellule à laquelle le terminal cible appartient (S72) ; et

si l'affaiblissement de propagation est inférieur à la valeur seuil, l'affectation d'une première zone fréquentielle de la deuxième station de base au terminal cible (S73).

17. Procédé selon la revendication 16, dans lequel l'étape de détermination (S52) comporte :

si l'affaiblissement de propagation est inférieur à la valeur seuil, la comparaison de l'affaiblissement de propagation dans une troisième station de base, qui est la deuxième station subissant le brouillage le plus significatif avec le terminal cible, à la valeur seuil, la troisième station de base étant l'une des stations de base adjacentes à la première station de base ; et

si l'affaiblissement de propagation dans la troisième station de base est inférieur à la valeur seuil, la réduction de la puissance d'émission du terminal cible, d'une différence entre l'affaiblissement de propagation dans la troisième station de base et la valeur seuil (S74).

18. Procédé selon la revendication 13, dans lequel l'étape de détermination (S52) comporte :

la comparaison de l'affaiblissement de propagation dans une deuxième station de base, qui est la station subissant le brouillage le plus significatif avec le terminal cible à une première valeur seuil (S81), la deuxième station de base étant l'une des stations de base adjacentes à la première station de base ;

si l'affaiblissement de propagation dans la deuxième station de base est supérieur à la première valeur seuil, la comparaison de l'affaiblissement de propagation dans la première station de base au sein de la première cellule à laquelle le terminal appartient, à une seconde valeur seuil (S82) ;

si l'affaiblissement de propagation dans la première station de base est inférieur à la seconde valeur seuil, l'affectation de la première zone fréquentielle de la première station de base au terminal cible (S83) ;

si l'affaiblissement de propagation dans la première station de base est supérieur à la seconde valeur seuil, l'affectation au terminal cible d'une zone fréquentielle individuelle ou d'une première zone fréquentielle d'une station de base adjacente à la première station de base (S84) ; et

si l'affaiblissement de propagation dans la deuxième station de base est inférieur à la première valeur seuil, l'affectation d'une première zone fréquentielle de la deuxième station de base au terminal cible (S85).

19. Procédé selon la revendication 18, dans lequel l'étape de détermination (S52) comporte en outre :

si l'affaiblissement de propagation dans la deuxième station de base est inférieur à la première valeur seuil, la comparaison de l'affaiblissement de propagation dans une troisième station de base, qui est la deuxième station subissant le brouillage le plus significatif avec le terminal cible, à la première valeur seuil, la troisième station de base étant l'une des stations de base adjacentes à la première station de base ; et

si l'affaiblissement de propagation dans la troisième station de base est inférieur à la première valeur seuil, la réduction de la puissance d'émission du terminal cible, d'une différence entre l'affaiblissement de propagation dans la troisième station de base et la première valeur seuil (S86).

20. Procédé selon la revendication 13, dans lequel la communication est une communication en liaison montante.

21. Procédé de commande de stations de base, le procédé comportant :

la réception d'informations sur un affaiblissement de propagation à partir d'un terminal cible localisé dans une première cellule couverte par une première station de base ;

la détermination d'une zone de code pour le terminal cible sur la base des informations sur l'affaiblissement de propagation, dans lequel la première station de base présente une pluralité de zones de code affectées à des terminaux localisés dans la première cellule, et la pluralité de zones de code inclut une première zone de code affectée à des terminaux localisés dans une partie centrale de la première cellule et des

deuxièmes à $N^{\text{ièmes}}$ zones de code affectées à des terminaux localisés dans des parties périphériques environnant la partie centrale, les deuxièmes à $N^{\text{ièmes}}$ zones de code correspondant à des premières zones de code de stations de base adjacentes à la première station de base, respectivement, les zones de code utilisant des codes mutuellement différents, et N étant un nombre entier positif ; et

la mise en oeuvre de la communication avec le terminal cible au sein de la zone de code déterminée.

[Fig. 1]

[Fig. 2]

[Fig. 3]

[Fig. 4]

[Fig. 5]

RECEIVE INFORMATION ON PATH LOSS FROM TERMINAL — S11

DETERMINE TIME REGION FOR TERMINAL — S12

PERFORM COMMUNICATION WITH TERMINAL IN DETERMINED TIME REGION — S13

[Fig. 6]

S21

$D2 < TH1$?

No → ASSIGN WHISPERING TIME REGION OF I1 BASE STATION TO TERMINAL — S22

Yes

ASSIGN WHISPERING TIME REGION OF I2 BASE STATION TO TERMINAL — S23

WHEN $D3 < TH1$, REDUCE TRANSMIT POWER OF TERMINAL BY DIFFERENCE BETWEEN TH1 AND D3 — S24

[Fig. 7]

S31

$L2 < TH1'$?

No → ASSIGN WHISPERING TIME REGION OF I1 BASE STATION TO TERMINAL — S32

Yes

ASSIGN WHISPERING TIME REGION OF I2 BASE STATION TO TERMINAL — S33

WHEN $L3 < TH1'$, REDUCE TRANSMIT POWER OF TERMINAL BY DIFFERENCE BETWEEN TH1' AND L3 — S34

[Fig. 8]

```
            S41                      S42                          S44
                            No                         No  ASSIGN INDIVIDUAL TIME
    ⟨ L2<TH1'? ⟩ ──────────→ ⟨ L1<TH2? ⟩ ──────────→  REGION OR WHISPERING TIME
                                                          REGION OF ADJACENT BASE
        │ Yes                    │ Yes                     STATION TO TERMINAL
        │                        │
        │              ┌─────────────────────┐
        │              │ ASSIGN WHISPERING   │
        │              │ TIME REGION OF l1 BASE├─ S43
        │              │  STATION TO TERMINAL │
        │              └─────────────────────┘
        │                        │
        ↓                        ↓
┌─────────────────┐   ┌──────────────────────┐
│ ASSIGN WHISPERING│   │ WHEN L3<TH1', REDUCE │
│ TIME REGION OF l2 BASE│   │ TRANSMIT POWER OF    │
│ STATION TO TERMINAL │   │ TERMINAL BY DIFFERENCE│
└─────────────────┘   │ BETWEEN TH1' AND L3  │
        │              └──────────────────────┘
       S45                       │
                                S46
```

[Fig. 9]

## cdf of SIR

conventional UL
proposed UL

cdf vs SIR (dB)

[Fig. 10]

[Fig. 11]

| RECEIVE INFORMATION ON PATH LOSS FROM TERMINAL | S51 |
| DETERMINE FREQUENCY REGION FOR TERMINAL | S52 |
| PERFORM COMMUNICATION WITH TERMINAL IN DETERMINED FREQUENCY REGION | S53 |

EP 1 820 360 B1

[Fig. 12]

S61

D2<TH1? — No → ASSIGN WHISPERING FREQUENCY REGION OF I1 BASE STATION TO TERMINAL — S62

Yes ↓

ASSIGN WHISPERING FREQUENCY REGION OF I2 BASE STATION TO TERMINAL — S63

WHEN D3<TH1, REDUCE TRANSMIT POWER OF TERMINAL BY DIFFERENCE BETWEEN TH1 AND D3 — S64

[Fig. 13]

S71

L2<TH1'? — No → ASSIGN WHISPERING FREQUENCY REGION OF I1 BASE STATION TO TERMINAL — S72

Yes ↓

ASSIGN WHISPERING FREQUENCY REGION OF I2 BASE STATION TO TERMINAL — S73

WHEN L3<TH1', REDUCE TRANSMIT POWER OF TERMINAL BY DIFFERENCE BETWEEN TH1' AND L3 — S74

24

[Fig. 14]

S84
ASSIGN INDIVIDUAL FREQUENCY
REGION OR WHISPERING
FREQUENCY REGION OF ADJACENT
BASE STATION TO TERMINAL

S81
L2<TH1'?    No →    S82
L1<TH2?    No →

Yes

Yes

ASSIGN WHISPERING
FREQUENCY REGION OF I1
BASE STATION TO TERMINAL   ~ S83

ASSIGN WHISPERING
FREQUENCY REGION OF I2
BASE STATION TO TERMINAL

S85

WHEN L3<TH1', REDUCE
TRANSMIT POWER OF
TERMINAL BY DIFFERENCE
BETWEEN TH1' AND L3

S86

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20040076438
- CA 2162256 A1
- US 2001017851 A1